# Europäisches Patentamt
## European Patent Office
### Office européen des brevets

(19)

(11) Publication number: **0 134 095**
**B1**

(12) **EUROPEAN PATENT SPECIFICATION**

(45) Date of publication of patent specification: **03.06.87**

(51) Int. Cl.⁴: **B 65 G 65/23**

(21) Application number: **84305021.2**

(22) Date of filing: **24.07.84**

(54) **Platformto tiltably support containers.**

<table>
<tr><td>

(30) Priority: **26.07.83 AU 483/83**

(43) Date of publication of application:
**13.03.85 Bulletin 85/11**

(45) Publication of the grant of the patent:
**03.06.87 Bulletin 87/23**

(84) Designated Contracting States:
**AT BE CH DE FR GB IT LI LU NL SE**

(56) References cited:
**AU-B-6 441 980**
**GB-A-1 580 197**

</td><td>

(73) Proprietor: **Karpisek, Ladislav Stephan**
**86 Woodfield Boulevarde**
**Caringbah, N.S.W. 2229 (AU)**

(72) Inventor: **Karpisek, Ladislav Stephan**
**86 Woodfield Boulevarde**
**Caringbah, N.S.W. 2229 (AU)**

(74) Representative: **King, Bertram Thomas**
**KINGS PATENT AGENCY LIMITED**
**Wardrobe Court**
**146a Queen Victoria Street**
**London EC4V 5AT (GB)**

</td></tr>
</table>

Courier Press, Leamington Spa, England.

EP 0 134 095 B1

## Description

This invention relates to a platform for containers incorporating means to allow the container to be tilted to facilitate the discharge of materials housed in the container.

Such a platform is disclosed in AU—B—64419/80 which provides a platform having a base with a tiltable support for the bottom of a container and means to pivotally connect the support to the base. The pivoted interconnection is permanent and external means are required to raise the support from the horizontal position to a tilted position. The amount of effort needed to raise the support can be considerable.

According to this invention the means to pivotally connect the support to the base comprises a releasable latching means on the base engageable with a spigot means on the support and load compressible suspension means disposed between the base and the support to bias the support and the bottom of a container when mounted thereon into a position inclined to the horizontal when the latching means is operative, and to bias the support and the bottom of the container into a horizontal position when the latching means is inoperative.

Preferably the spigot means are engaged in the tracks of brackets in the base and the spigot means are releasably engageable when in a lowered position in the tracks by retaining means to provide pivotal interconnection between the support and the base.

In an especially desirable embodiment of the invention the platform of the invention includes an arch frame extending across the container mounted on the tiltable support and pivotally connected to diagonal braces connecting corner support columns to the support with a pivot axis parallel to the pivot axis of the spigot means, tension springs extending between the arch frame and arm means pivotally connected at a first end thereof to the base remote from the releasable latching means and connected at its other end through link means to the arch frame adjacent the releasable latching means, the tension springs biassing the arch frame towards a rest position where the top of the arch frame lies above the axis of the spigot means.

By way of example preferred forms of the invention will now be described with reference to the accompanying schematic illustrations in which:—

Figure 1 shows a simple form of the tiltable platform and is a two spring version on which there is an empty container,

Figure 2 is a view similar to Figure 1 wherein the platform supports a loaded container,

Figure 3 is a view similar to Figure 1 showing the relative angular relationship of the base and the container support of the platform when the container is only partly filled,

Figure 4 is a view similar to Figure 1 showing a four spring tiltable platform,

Figure 5 is a modified version of the Figure 4 arrangement including apparatus to extract a liner bag from the container as the contents of the bag are discharged, the container shown is empty,

Figure 6 is a view similar to Figure 5 but here the container is full, and

Figure 7 is a view of the Figure 6 arrangement after a substantial amount of the contents of the container has been discharged.

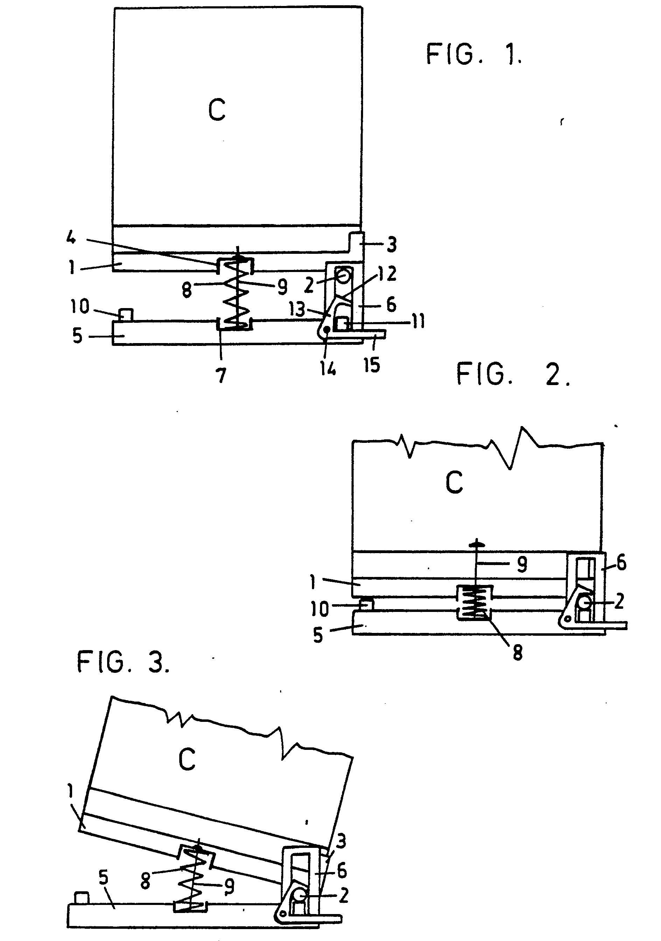

In Figure 1 there is a support 1, which can be of any form for example a simple rectangular frame, with a pair of aligned spigots 2 extending from opposite sides of the support 1 of the platform. At the front edge of the support 1 there is an upstanding stop means 3 which may be in the form of lugs or a bar against which a base corner of a container mounted on the support 1 will bear during the discharge of the container. There are two upper spring sockets 4 respectively fixed to the sides of the support having the spigots 2.

The base 5, which can be of any suitable form for example a simple rectangular frame, has two track forming brackets 6 at opposite sides and the spigots 2 are slidably mounted in the tracks of the brackets 6. There are lower spring sockets 7 fixed to the sides of the base having the brackets 6 and a load compression suspension 8 is disposed between each pair of upper and lower spring sockets. There is a spring extension limiting rod 9 passing through each suspension 8. Preferably the rods 9 are pivotally connected to the spring sockets 7 and the upper spring sockets 4 are pivotally connected to the support.

Referring to Figs. 2 and 3, a container C assumed to be of rectangular form and possibly of the type comprising two interconnected panel pairs forming an enclosure fixed to a conventional pallet, is shown mounted on the support 1.

The container C has a discharge means adjacent the bottom edge of the front side of container. When a full container C is loaded onto the support 1 it will cause the springs 8 to be compressed and the support to come to rest on stop blocks 10 on the base 5 and the spigots 2 to come to rest on the stop blocks 11 on the base 5. In descending the spigots 2 would engage the upper sloping faces 12 of hooked upper ends of arms 13 pivoted at 14 to the base and interconnected through arm extensions 15. The resulting cam action would have caused the arms 13 to pivot in a clockwise direction and upon passage of the spigots 2 beyond the ends of the hooks the counterbalancing weight of the arm extensions 15 and their interconnection would cause the hooks to overlie the spigots 2 thereby holding the spigots captive.

As the tilting support will usually be located adjacent a plant operating an industrial process, where it is constantly discharging a given product from containers into a hopper of the like, it is possible to design the suspension so that after the container has been emptied to a given level the stored energy in the suspension 8 is sufficient to commence elevation of the rear end of the support 1. The upper spring sockets will move upwardly within the limits imposed by the extension limiting rods 9 to produce the configuration shown in figure 3 which is the designed maximum incline for the illustrated arrangement.

When the container is empty the spigots 2 are manually released from engagement by the hooks and because of the positioning and strength of the suspension 8 the support 1 and the base of the container thereon will acquire a substantially horizontal condition as illustrated in Fig. 1. The container C can then be replaced by a new fully loaded container and the sequence can be repeated.

The arrangement is particularly suitable for liquids but can be used for granular or powdered materials.

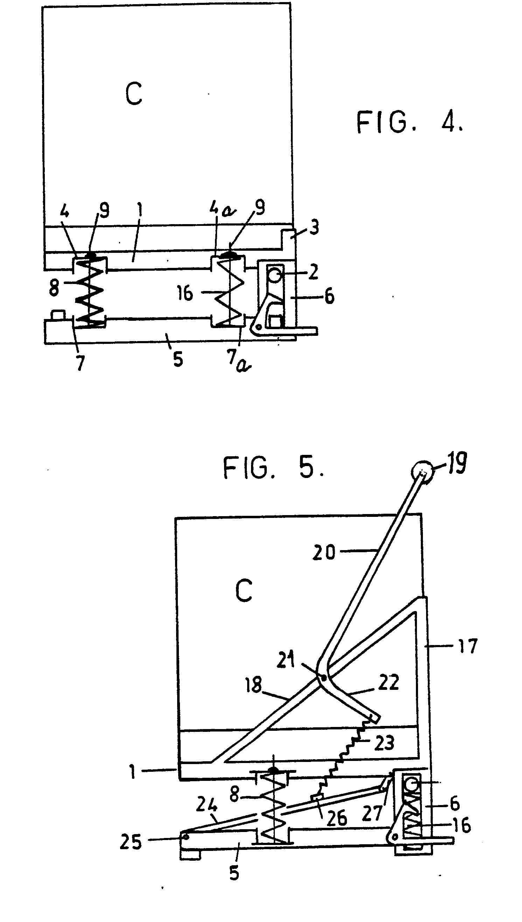

The arrangement shown in Fig. 4 is similar to that shown in Figs. 1 to 3 except that the load compression suspension 8 are located more to the rear of the support 1 and suspension 16, weaker than springs 8, are located in spring sockets 4a and 7a adjacent the brackets 6. In an alternative arrangement as shown in Figs. 5 to 7 the brackets 6 are formed to provide housings for the suspension 16 which are disposed between the spigots 2 and the base 5. The suspension 16 need only be strong enough to maintain the front end of the support 1 elevated when the container is empty, and in the case of Figs. 5 to 7 maintain the spigots at the upper ends of the tracks in the brackets 6 when the container is empty. The suspension 8 must however be strong enough to tilt the support when the container is still partly filled.

Referring now to the arrangement shown in Figures 5 to 7 it will be seen that the support 1 has additional features. These include a bag extractor of the type covered by my patent AU—B—64419/80 and includes corner support columns 17 in place of the lugs as stop means 3 and diagonal braces 18 connecting the columns 17 to the support 1. An arch member having a top tie roller 19 and arms 20 pivotally connected at 21 on the braces 18 extends over the container C. Angled extensions 22 of the arms 20 of the arch frame are respectively connected by springs 23 to two spaced apart arms 24 pivotally connected at first ends at 25 to the base 5. The arms 24 are interconnected by a bar 26 and the other ends of the arms 24 are connected through links 27 to the underside of the support 1. The bag extractor is for the elevation and discharge promotional movement of a plastic liner bag used in the container to house in a sterile manner material transported in the container, such as powdered foodstuffs.

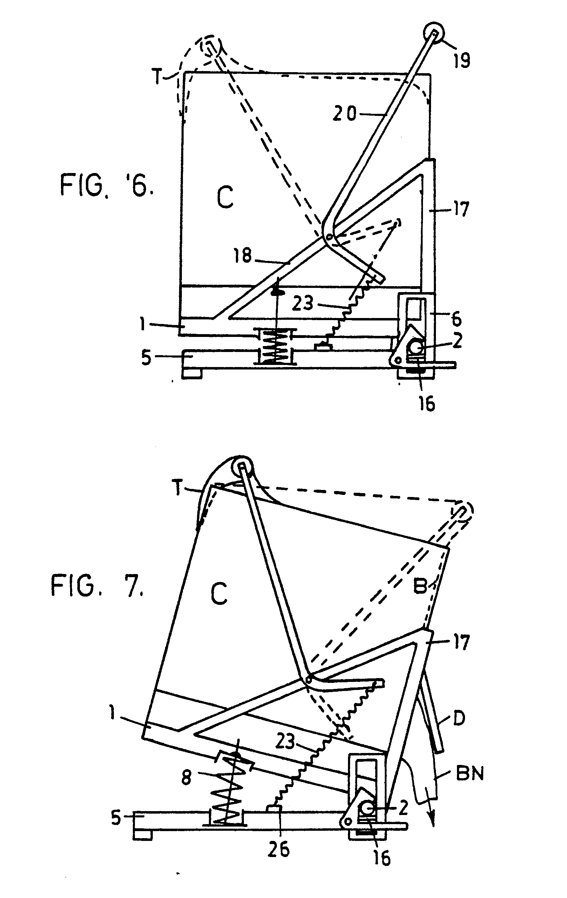

A detailed description of the operation of a bag extractor is given in my patent AU—B—64419/80 referred to above but in summary the operation is as follows. The liner bag has a top tail T which is pulled over the roller 19 when the arms 20 are moved to the dotted position shown in Figure 6 and the tail T is tied down. The movement of the arms 20 causes the springs 23 to be tensioned. Discharge of the material in the liner bag commences through the bag nose BN extending through an opening in the lower front side of the container C normally covered by the hinged door D. As previously explained the rear suspension 8 will cause the support to tilt when a predetermined amount of material has been discharged from the container thereby facilitating the gravity discharge of material from the liner bag. As the weight of the material in the liner bag decreases it will reach a stage where the energy stored in the springs 23 will be sufficient to move the roller 19 to raise the liner bag within the container thereby urging material in the bag towards the bag nose BN. The final position of the roller 19 is shown in dotted lines in Fig. 7 and at this time the liner bag will have a configuration somewhat like that shown in broken line in Fig. 7 and indicated B.

The purpose of the arms 24 is as follows. Looking at Fig. 6, the springs 23 are designed to be almost in their collapsed state when the Fig. 6 configuration exists. The arch arms 20 are moved to the dotted position (Fig. 6) and this will tension the springs 23 somewhat. The top tail T is connected to the container and emptying commences. The spigots 2 are held in the down position by the hooked members and the links 27 connected to the arms 24 prevent them from moving from their lowered position illustrated in Figs. 6 and 7.

Emptying continues and as the container empties and the platform begins to rise under the influence of the springs 8 the anchor point of the springs 23 to the arm extensions 22 moves away from the bar 26 which results in the springs being further stretched. The energy now stored in the springs 23 is sufficient to ensure commencement of bag extraction when the major extractive force is required i.e. when the container is tilted and has a large amount of material remaining therein. Thus the springs 23 are able to be stretched by hand to achieve the dotted position in Fig. 6, because of their nominal stretched condition, but have energy storing additional stretch applied when required, i.e. when the container tilts and the bag needs extraction.

Further emptying results in the arms 20 achieving the dotted position shown in Fig. 7 and at this stage the springs 23 are extended somewhat and are longer than when in the basic position as shown in full lines in Fig. 6 but are shorter than when fully stretched for maximum power as shown in full lines in Fig. 7. When the container C is empty and the spigots 2 are released from the hooked members the configuration is as shown in Fig. 5 where it will be seen that the arms 24 are elevated thereby reducing the tension in the springs 23, a state which remains substantially constant in the Fig. 6 configuration.

Another aspect is that when the spigots 2 are released by the hooked members the upthrust of the suspension 16 is supplemented by the contraction force exerted by the springs 23. If the bars 24 were not provided and the springs 23 were anchored to the base 5 the springs 23 would be acting against the suspension 8 and 16. Springs acting against springs or arrangements where effects depend upon the balancing of spring strengths are undesirable and this has been taken into account in the design of the present embodiment of the invention.

### Claims

1. A platform comprising a base (5), a tiltable support (1) for the bottom of a container (C) and means to pivotally connect the support (1) to the base (5) characterised in that the means to pivotally connect the support (1) to the base (5) comprises a releasable latching means (2, 6, 12, 13, 14, 15) on the base (5) engageable with a spigot means (2) on the support (1) and load compressible suspension means (8, 16) disposed between the base (5) and the suport (1) to bias the support (1) and the bottom of a container (C) when mounted thereon into a position inclined to the horizontal when the latching means (2, 6, 12, 13, 14, 15) is operative, and to bias the support (1) and the bottom of the container (C) into a horizontal position when the latching means (2, 6, 12, 13, 14, 15) is inoperative.

2. A platform as claimed in Claim 1, wherein the spigot means (2) are engaged in the tracks of brackets (6) in the base (5) and the spigot means (2) are releasably engageable by retaining means (12, 13, 14, 15) when in a lowered position in the tracks to provide pivotal interconnection between the support (1) and the base (5).

3. A platform as claimed in claim 1 or claim 2, wherein the load compressible suspension means comprises compression springs (8, 16) disposed between the base (5) and the support (1).

4. A platform as claimed in claim 3, wherein the load compressible suspension means comprises pairs of compression springs (8, 16) disposed between the base (5) and the support (1).

5. A platform as claimed in claim 4, including 2 pairs of compression springs (8, 16) comprising a first pair of compression springs (8) disposed remotely from the releasable latching means (2, 6, 12, 13, 14, 15) and a second pair of compression springs (16) weaker than the pair of compression springs (8) and disposed adjacent the releasable latching means (2, 6, 12, 13, 14, 15).

6. A platform as claimed in claim 4, including 2 pairs of compression springs (8, 16) comprising a second pair of compression springs (16) disposed between the spigot means (2) and the base (5) and a first pair of compression springs (8) stronger than the second pair of compression springs (16) and disposed remotely from the releasable latching means (2, 6, 12, 13, 14, 15).

7. A platform as claimed in any of claims 2 to 6, including an arch frame (20, 22) extending across the container (C) mounted on the tiltable support (1) and pivotally connected to diagonal braces (18) connecting corner support columns (17) to the support (1) with a pivot axis (21) parallel to the pivot axis of the spigot means (2), tension springs (23) extending between the arch frame (20, 22) and arm means (24) pivotally connected at a first end thereof to the base remote from the releasable latching means (2, 6, 12, 13, 14, 15) and connected at its other end through link means to the arch frame adjacent the releasable latching means (2, 6, 12, 13, 14, 15), the tension springs (23) biassing the arch frame (20, 22) towards a rest position where the top of the arch frame (20, 22) lies above the axis of the spigot means (2).

### Patentansprüche

1. Plattform mit einer Basis (5), einem kippbaren Träger (1) für den Boden eines Behälters (C) und einer gelenkigen Verbindung zwischen dem Träger (1) und der Basis (5), dadurch gekennzeichnet, daß die gelenkige Verbindung zwischen dem Träger (1) und der Basis (5) eine lösbare an der Basis (5) vorgesehene Rastvorrichtung (2, 6, 12, 13, 14, 15), mit der eine am Träger (1) angeordnete Zapfenanordnung (2) verrastbar ist, und eine unter Belastung kompressible Lagerung (8, 16) aufweist, die zwischen der Basis (5) und dem Träger (1) angeordnet ist und zur Vorspannung des Trägers (1) samt dem Boden des darauf gelagerten Behälters (C) bei wirksamer Rastvorrichtung (2, 6, 12, 13, 14, 15) in eine zur Horizontalen geneigte Lage bzw. zur Vorspannung des Trägers (1) samt dem Boden des Bahälters (C) bei unwirksamer Rastvorrichtung (2, 6, 12, 13, 14, 15) in die horizontale Lage dient.

2. Plattform nach Anspruch 1, dadurch gekennzeichnet, daß die Zapfenanordnung (2) in die Führungen von Bügeln (6) der Basis (5) eingreift und in einer im unteren Bereich der Führungen befindlichen Lage zur Bildung einer Schwenkverbindung zwischen dem Träger (1) und der Basis (5) mittels einer Verriegelungseinrichtung (12, 13, 14, 15) lösbar verriegelbar ist.

3. Plattform nach Anspruch 1 oder 2, dadurch gekennzeichnet, daß die unter Belastung kompressible Lagerung Druckfedern (8, 16) aufweist, die zwischen der Basis (5) und dem Träger (1) angenordnet sind.

4. Plattform nach Anspruch 3, dadurch gekennzeichnet, daß die unter Belastung kompressible Lagerung aus paarweise zwischen der Basis (5) und dem Träger (1) angeordneten Druckfedern (8, 16) besteht.

5. Plattform nach Anspruch 4, dadurch gekennzeichnet, daß zwei Paare Druckfedern (8, 16) vorgesehen sind, von denen das erste Paar Druckfedern (8) im Abstand von der lösbaren Rastvorrichtung (2, 6, 12, 13, 14, 15) und das zweite Paar Druckfedern (16), die schwächer als diejenigen des ersten Paares Druckfedern (8) sind, der lösbaren Rastvorrichtung (2, 6, 12, 13, 14, 15) benachbart angeordnet ist.

6. Plattform nach Anspruch 4, dadurch gekennzeichnet, daß zwei Paare Druckfedern (8, 16) vorgesehen sind, von denen das zweite Paar Druckfedern (16) zwischen der Zapfenanordnung (2) und der Basis (5) und das erste Paar Druckfedern (8), die stärker als diejenigen des zweiten Paares Druckfedern (16) sind, im Abstand von der lösbaren Rastvorrichtung (2, 6, 12, 13, 14, 15) angeordnet ist.

7. Plattform nach den Ansprüchen 2 bis 6, gekennzeichnet durch einen über den Behälter (C) erstreckten und auf dem kippbaren Träger (1) montierten gewölbten Bügel (20, 22), der an Ecksteher (17) mit dem Träger (1) verbindenden Diagonalstreben (18) um eine zur Schwenkachse der Zapfenanordnung (2) parallele Schwenkachse (21) verschwenkbar angeschlossen ist, durch Zugfedern (23), die zwischen dem gewölbten Bügel (20, 22) und einer Armanordnung (24) verlaufen, die mit ihrem einen Ende im Abstand von der lösbaren Rastvorrichtung (2, 6, 12, 13, 14, 15) mit der Basis (5) gelenkig verbunden ist und mit ihrem anderen Ende über Verbindungsglieder mit dem der lösbaren Rastvorrichtung (2, 6, 12, 13, 14, 15) benachbarten gewölbten Bügel (20, 22) verbunden ist, wobei die Zugfedern (23) den gewölbten Bügel (20, 22) in einer Ruhestellung halten, in der die Oberseite des gewölbten Bügels (20, 22) über der Achse der Zapfenanordnung (2) liegt.

## Revendications

1. Plate-forme comportant une embase (5), un support inclinable (1) pour le fond d'un conteneur (C) et un dispositif destiné à articuler ce support (1) sur cette embase (5), caractérisée en ce que le dispositif destiné à articuler le support (1) sur l'embase (5) comprend un mécanisme de verrouillage libérable (2, 6, 12, 13, 14, 15), monté sur cette embase (5) et pouvant venir en prise avec des broches (2) de ce support (1), et des suspensions (8, 16) compressibles sous charge, disposées entre l'embase (5) et le support (1) de manière à solliciter ce support et le fond d'un conteneur (C), lorsque celui-ci est monté sur ce support, à une position inclinée sur l'horizontale quand le mécanisme de verrouillage (2, 6, 12, 13, 14, 15) est enclenché et à une position horizontale quand ce mécanisme est inactif.

2. Plate-forme selon la revendication 1, dans laquelle les broches (2) sont engagées dans des rails formés dans des supports (6) montés sur l'embase (5) et un organe de retenue (12, 13, 14, 15) libérable peut venir en prise avec ces broches (2) quand celles-ci occupent leur position basse dans les rails, de façon à réaliser la liaison articulée entre le support (1) et l'embase (5).

3. Plate-forme selon la revendication 1 ou la revendication 2, dans laquelle les suspensions compressibles sous charge sont ou comprennent de ressorts (8, 16) de compression disposés entre l'embase (5) et le support (1).

4. Plate-forme selon la revendication 3, dans laquelle les suspensions compressibles sous charge sont ou comprennent des paires de ressorts (8, 16) de compression disposés entre l'embase (1) et le support (1).

5. Plate-forme selon la revendication 4, comportant deux paires (18, 16) de ressorts de compression, composées d'une première paire de ressorts (8) disposés à une certaine distance du mécanisme de verrouillage (2, 6, 12, 13, 14, 15) libérable, et d'une seconde paire de ressorts (16) plus faibles que les premiers (8) et adjacents à ce mécanisme de verrouillage (2, 6, 12, 13, 14, 15) libérale.

6. Plate-forme selon la revendication 4, comportant deux paires de ressorts (8, 16) de compression comprenant une seconde paire de ressorts (16) de compression disposés entre les broches (2) et l'embase (5) et une première paire de ressorts (8) de compression, plus forts que ceux de cette seconde paire de ressorts (26) et disposés à une certaine distance du mécanisme de verrouillage (2, 6, 12, 13, 14, 15) libérable.

7. Plate-forme selon l'une quelconque des revendications 2 à 6, comportant un arceau (20, 22) passant au-dessus du conteneur (C), qui est monté sur le support inclinable (1) et articulé sur des entretoises diagonales (18) qui relient des montants (17) de soutien des angles à ce support (1), l'axe de pivotement (21) étant parallèle à l'axe des broches (2), et des ressorts (23) de traction, montés entre cet arceau (20, 22) et des bras (24) dont une première extrémité est articulée sur l'embase (5) à une certaine distance du mécanisme de verrouillage (2, 6, 12, 13, 14, 15) libérable et dont l'autre extrémité est reliée audit arceau par l'intermédiaire de biellettes, près de ce mécanisme de verrouillage (2, 6, 12, 13, 14, 15) libérable, ces ressorts (23) sollicitant l'arceau (20, 22) à une position de repos dans laquelle sa partie supérieure se trouve au-dessus de l'axe des broches (2).

FIG. 1.

C

4
1
8  9  2  12
3
13
10  5
11
7  14  15

FIG. 2.

C

9
1
10
5
8
6
2

FIG. 3.

C

1
8  9
5
3
6
2

1

FIG. 4.

FIG. 5.

0 134 095

FIG. '6.

FIG. 7.

3